Europäisches Patentamt

European Patent Office

Office européen des brevets

(19)

(11) Veröffentlichungsnummer: **0 440 897 A1**

## (12) EUROPÄISCHE PATENTANMELDUNG

(21) Anmeldenummer: 90122451.9

(22) Anmeldetag: 26.11.90

(51) Int. Cl.⁵: **B60Q 3/02**

(30) Priorität: 31.01.90 DE 9001035 U

(43) Veröffentlichungstag der Anmeldung:
14.08.91 Patentblatt 91/33

(84) Benannte Vertragsstaaten:
DE FR GB SE

(71) Anmelder: **Hella KG Hueck & Co.**
**Rixbecker Strasse 75 Postfach 28 40**
**W-4780 Lippstadt(DE)**

(72) Erfinder: **Hagen, Werner**
**Mercklinghausstrasse 74**
**W-4780 Lippstadt(DE)**

(54) **Innenleuchte für Fahrzeuge.**

(57) Die Erfindung betrifft eine Innenleuchte für Fahrzeuge, die aus einem rahmenförmigen Gehäuse (1) besteht, in das eine Lichtscheibe (2) eingesetzt ist und in das zwei elektrisch isolierte Kontaktfedern zur Aufnahme und Kontaktgabe der Glühlampe (4) angeordnet sind. Das ein Fenster aufweisende rahmenförmige Gehäuse (1) weist nach innen vorspringende Ansätze (5,10) auf, die die Kontaktteile (3) der Glühlampe (4) aufnehmen. Die Glühlampe (4) ist von der Rückseite her durch ein brückenförmiges Teil abgedeckt, welches mit zwei sich gegenüberliegenden flanschartigen Rändern (8) lösbar mit den in das Gehäuseinnere weisenden Ansätzen (5,10) verrastet ist. Die Brücke weist die Form einer rinnenartigen Schale (6) auf, die mit den zwei gegenüberliegenden flanschartigen Rändern (8) schubladenartig auf nach innen vorspringende Ansätze (5,10) aufgeschoben ist.

FIG 1

EP 0 440 897 A1

# INNENLEUCHTE FÜR FAHRZEUGE

Die Erfindung betrifft eine Innenleuchte für Fahrzeuge, die aus einem rahmenförmigen Gehäuse besteht, in das eine Lichtscheibe eingesetzt ist. Das rahmenförmige Gehäuse ist in eine Mulde oder Öffnung der Fahrzeugwand einsetzbar und enthält zwei elektrisch isolierte Kontaktfedern zur Aufnahme und Kontaktgabe der Glühlampe. Ein von der Lichtscheibe abgedecktes Fenster des rahmenförmigen Gehäuses weist nach innen vorspringende Ansätze auf, die die Kontaktteile der Glühlampe aufnehmen.

Innenleuchten dieser Art sind allgemein bekannt und finden Anwendung in unterschiedlichsten Einbaulagen. Es kann jedoch in Abhängigkeit von den örtlichen Einbaubedingungen und der Art der Verkabelung zu Kurzschlüssen durch ungewollte Kontakte oder durch unerwünschte Aufheizungen der Verkleidung bzw. des Isolationsmaterials durch die Glühlampe kommen, so daß Kabelbrände oder ähnliche Defekte nicht auszuschließen sind.

Aufgabe der Erfindung ist es deshalb, einen Wärmeschutz bzw. eine Abdeckung anzubringen, der auch bei bereits vorhandenen Leuchten oben genannter Art nachträglich ohne dabei Veränderungen an der Leuchte selbst vornehmen zu müssen, montierbar ist, wobei die Abdeckung z. B. zum Glühlampenwechsel leicht ein- und ausrastbar ist.

Diese Aufgabe wird erfindungsgemäß dadurch gelöst, daß

- die Glühlampe von der Rückseite her durch ein brückenförmiges Teil abgedeckt ist, welches mit zwei gegenüberliegenden flanschartigen Rändern lösbar mit den in das Gehäuseinnere weisenden Ansätzen verrastbar ist,
- die Brücke die Form einer rinnenartigen Schale aufweist,
- die rinnenartige Schale mit den zwei gegenüberliegenden, flanschartigen Rändern schubladenartig auf die nach innen vorspringenden Ansätze aufgeschoben ist.

Um in der Innenleuchte eine gute Ventilation zu erhalten, ist es von Vorteil, daß die rinnenartige Schale Durchbrüche aufweist.

Eine andere zweckmäßige Ausgestaltung der Erfindung zeigt die flanschartigen Ränder mit den in das Gehäuseinnere weisenden Ansätzen über eine Nut-Feder-Anordnung verbunden, wobei die Ränder beim Aufschieben eine vorübergehende elastische Verformung erfahren. Somit ist gegeben, daß die Schale in Funktionslage nicht unter Spannung steht, und eine Formveränderung deshalb ausgeschlossen ist.

In einer weiteren vorteilhaften Ausgestaltung ist die rinnenartige Schale in Endlage der Aufschiebung in einer Vertiefung formschlüssig verrastet.

Dies bewirkt einen spielfreien Sitz der Abdeckung der jederzeit leicht wieder zu lösen ist um beispielsweise die Glühlampe zu wechseln.

Weiterhin ist es vorteilhaft, daß die Nuten als abgekröpfte Haken in den flanschartigen Rändern eingeformt sind. Dies ermöglicht vor allem eine sehr unaufwendige und damit preiswerte Gestaltung des Formwerkzeugs, wobei am Endprodukt keine zusätzlichen Teile oder Nacharbeiten notwendig sind.

Ebenfalls von Vorteil ist, daß die rinnenartige Schale aus einem Kunststoff besteht, der auch unter Wärmebelastung seine vorgegebene Form aufrecht erhält.

In der Zeichnung ist ein vorteilhafte Ausführungsbeispiel der Erfindung dargestellt und zwar zeigen

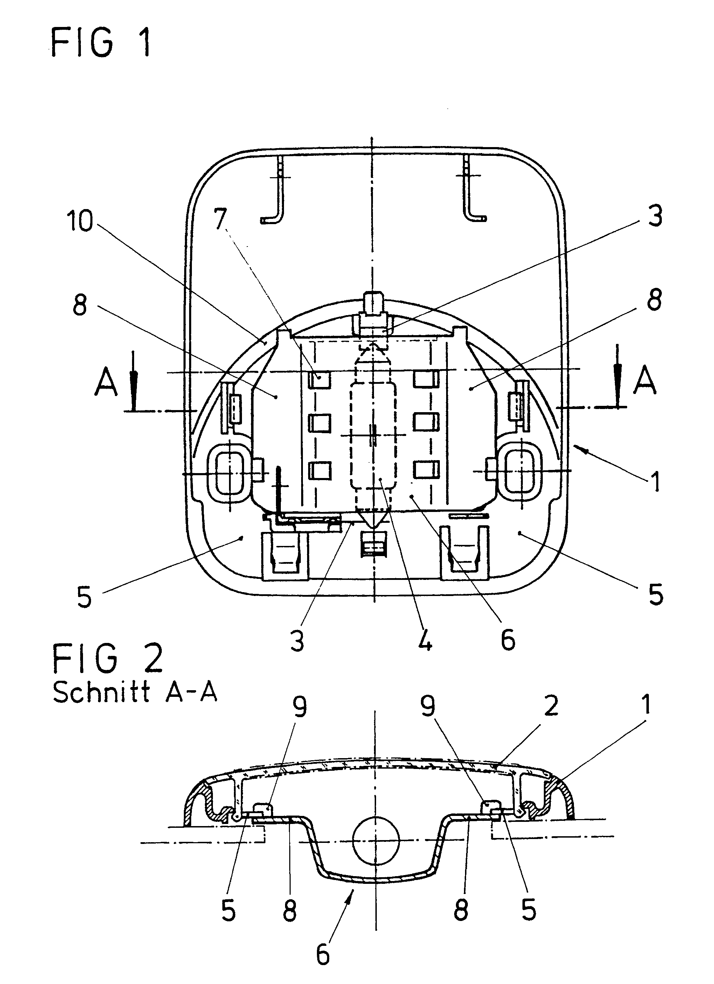

Figur 1 eine Ansicht auf die Unterseite der Innenleuchte,

Figur 2 einen Teilschnitt nach der Linie A-A.

Die Innenleuchte baut sich aus einem rahmenförmigen Gehäuse (1) mit einer darin eingesetzten Lichtscheibe (2) auf. Ein von der Lichtscheibe (2) abgedecktes Fenster im rahmenförmigen Gehäuse (1) weist nach innen vorspringende Ansätze (5, 10) auf, die Kontaktteile (3) einer Glühlampe (4) aufnehmen.

Die Glühlampe (4) ist an der Rückseite durch eine rinnenartige Schale (6) abgedeckt, welche mit zwei sich gegenüberliegenden, flanschartigen Rändern (8) und den Ansätzen (5) verrastbar sind. Die Verrastung erfolgt in Nuten, die in Form von abgekröpften Haken (9) in den flanschartigen Rändern (8) eingeformt sind. Bei der Verrastung werden die abgekröpften Haken (9), die sich als kurze Nuten darstellen, schubladenförmig auf die Ansätze (5) aufgeschoben. Dabei entsteht eine Nut-Feder-Anordnung, die in den flanschartigen Rändern (8) eine vorübergehende elastische Verformung herbeiführt. In Endstellung der Aufschiebebewegung rutschen die flanschartigen Ränder (8) über den Ansatz (10) in eine Vertiefung an den flanschartigen Rändern (8) und beenden die Schubbewegung durch eine formschlüssige Verrastung, bei der auch die elastische Verformung der flanschartigen Ränder (8) in ihre Ursprungslage zurückgeführt wird.

Im übrigen weist die rinnenartige Schale (6) Durchbrüche (7) zu Ventilationszwecken auf.

## Patentansprüche

1. Innenleuchte für Fahrzeuge mit den Merkmalen:
    - die Innenleuchte besteht aus einem rahmenförmigen Gehäuse, in das eine Lichtscheibe eingesetzt ist,

- in das rahmenförmige Gehäuse sind zwei elektrisch isolierte Kontaktfedern zur Aufnahme und Kontaktgabe der Glühlampe angeordnet,
- das ein Fenster aufweisende rahmenförmige Gehäuse weist nach innen vorspringende Ansätze auf, die die Kontaktteile der Glühlampe aufnehmen.

gekennzeichnet durch die Merkmale:

a) die Glühlampe (4) ist von der Rückseite her durch ein brückenförmiges Teil abgedeckt, welches mit zwei sich gegenüberliegenden flanschartigen Rändern (8) lösbar mit den in das Gehäuseinnere weisenden Ansätzen (5) verrastet ist,

b) die Brücke weist die Form einer rinnenartigen Schale (6) auf,

c) die rinnenartige Schale (6) ist mit den zwei gegenüberliegenden, flanschartigen Rändern (8) schubladenartig auf nach innen vorspringende Ansätze (5) aufgeschoben.

2. Innenleuchte nach Anspruch 1, dadurch gekennzeichnet, daß die rinnenartige Schale (6) Durchbrüche (7) zu Ventilationszwecken aufweist.

3. Innenleuchte nach Anspruch 1 oder 2, dadurch gekennzeichnet, daß die flanschartigen Ränder (8) mit den in das Gehäuseinnere weisenden Ansätzen (5) über eine Nut-Feder-Anordnung verbunden sind.

4. Innenleuchte nach einem der vorstehenden Ansprüche, dadurch gekennzeichnet, daß die Ränder (8) beim Aufschieben eine vorübergehende elastische Verformung erfahren und die rinnenartige Schale (6) in Endlage der Aufschiebung in einer Vertiefung formschlüssig verrastet ist.

5. Innenleuchte nach einem der vorstehenden Ansprüche, dadurch gekennzeichnet, daß die Nuten als abgekröpfte Haken (9) in den flanschartigen Rändern (8) eingeformt sind.

6. Innenleuchte nach einem der vorhergehenden Ansprüche, dadurch gekennzeichnet, daß die rinnenartige Schale aus einem warmfesten Kunststoff besteht.

# FIG 1

# FIG 2
## Schnitt A-A

**Europäisches Patentamt**

# EUROPÄISCHER RECHERCHENBERICHT

Nummer der Anmeldung

**EP 90 12 2451**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | DE-A-3 218 184 (WESTFÄLISCHE METALL INDUSTRIE KG & CO) <br> * Zusammenfassung; Figur 1 * <br> – – – | 1 | B 60 Q 3/02 |
| Y,A | EP-A-0 059 437 (GTE PRODUCTS CORPORATION) <br> * Zusammenfassung; Figur 1 * <br> – – – – – | 1,2,5,6 | |
| | | | **RECHERCHIERTE SACHGEBIETE (Int. Cl.5)** |
| | | | B 60 Q <br> F 21 V |

Der vorliegende Recherchenbericht wurde für alle Patentansprüche erstellt

| Recherchenort | Abschlußdatum der Recherche | Prüfer |
|---|---|---|
| Den Haag | 06 Juni 91 | ONILLON C.G.A. |